(19) Europäisches Patentamt
European Patent Office
Office européen des brevets

(11) **EP 3 774 969 B1**

(12) **EUROPÄISCHE PATENTSCHRIFT**

(45) Veröffentlichungstag und Bekanntmachung des Hinweises auf die Patenterteilung:
**26.06.2024   Patentblatt 2024/26**

(21) Anmeldenummer: **19715118.6**

(22) Anmeldetag: **09.04.2019**

(51) Internationale Patentklassifikation (IPC):
*C08G 18/48* (2006.01)   *C08G 18/76* (2006.01)
*C08G 18/16* (2006.01)   *C08G 18/18* (2006.01)
*C08G 18/22* (2006.01)   *C08G 18/42* (2006.01)

(52) Gemeinsame Patentklassifikation (CPC):
**C08G 18/4238; C08G 18/163; C08G 18/1816; C08G 18/225; C08G 18/4211; C08G 18/485; C08G 18/7664**

(86) Internationale Anmeldenummer:
**PCT/EP2019/058874**

(87) Internationale Veröffentlichungsnummer:
**WO 2019/197364 (17.10.2019 Gazette 2019/42)**

(54) **VERFAHREN ZUR HERSTELLUNG VON POLYURETHAN/POLYISOCYANURAT (PUR/PIR) - HARTSCHAUMSTOFFEN**

METHOD FOR THE PREPARATION OF POLYURETHANE/POLYISOCYANURATE (PUR/PIR) RIGID FOAMS

PROCÉDÉ DE FABRICATION DE MOUSSES DURES DE POLYURÉTHANE/POLYISOCYANURATE (PUR/PIR)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.04.2018   EP 18167400**

(43) Veröffentlichungstag der Anmeldung:
**17.02.2021   Patentblatt 2021/07**

(73) Patentinhaber: **Covestro Deutschland AG**
**51373 Leverkusen (DE)**

(72) Erfinder:
• **WELSCH, Nicole**
  **51067 Köln (DE)**
• **KOESTER, Ralf**
  **51379 Leverkusen (DE)**

• **ABELS, Rene**
  **51061 Köln (DE)**
• **TINNEFELD, Inge**
  **50737 Köln (DE)**

(74) Vertreter: **Levpat**
**c/o Covestro AG**
**Gebäude 4825**
**51365 Leverkusen (DE)**

(56) Entgegenhaltungen:
**EP-A2- 2 688 933     US-A- 4 277 571**
**US-A- 5 286 758**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Herstellung von Polyurethan/Polyisocyanurat (PUR/PIR) - Hartschaumstoffen umfassend den Schritt i) Umsetzung eines Reaktionsgemisches enthaltend

A) eine Polyisocyanatkomponente und

B) eine Isocyanat-reaktive Komponente umfassend

- 50,0 bis 90,0 Gew.-% wenigstens eines Polyesterpolyols und/oder Polyetheresterpolyols B1.a) mit einer Hydroxylzahl im Bereich von 80 mg KOH/g bis 290 mg KOH/g bestimmt gemäß DIN 53240,
- 1,0 bis 20,0 Gew.-% wenigstens eines Polyetherpolyols B1.b) mit einer Hydroxylzahl im Bereich von 300 mg KOH/g bis 600 mg KOH/g bestimmt gemäß DIN 53240,
- 0,0 bis 5,0 Gew.-% niedermolekularen Isocyanat-reaktive Verbindungen B1.c) mit einer Molmasse $M_n$ kleiner als 400 g/mol,
- 1,0 bis 30,0 Gew.-% wenigstens eines Flammschutzmittels B.3),
- 0,1 bis 4,0 Gew.-% Kaliumformiat B2.a) und
- 0,1 bis 3,0 Gew.-% aminische Komponenten B2.b)

wobei die Angaben in Gew.-% jeweils auf alle Komponenten der isocyanat-reaktiven Zusammensetzung B) bezogen sind,

enthält,

und die Komponente A) ein Gemisch von Diphenylmethan-4,4'-diisocyanat mit seinen Isomeren und höherfunktionellen Homologen enthält, und

dass das Reaktionsgemisch weniger als 0,2 Gew.-% Ameisensäure enthält und einen Isocyanat-Index von $\geq 150$ bis $\leq 450$ aufweist,

und unter der Maßgabe, dass die aminische Komponente B2.b) und das in Schritt i) umgesetzte Reaktionsgemisch keine aminischen Verbindungen mit der Formel (I)

$$R^1N(CH_3)(CH_2CH_2OR^2) \qquad (I)$$

wobei $R^1$ für $CH_3$, $CH_2$-$CH_2$-$N(CH_3)_2$ oder $CH_2$-$CH_2OH$, und
$R^2$ für H, $CH_2$-$CH_2OH$ oder $CH_2$-$CH_2N(CH_3)_2$ steht,
enthält.

Polyurethan/Polyisocyanurat (PUR/PIR) - Hartschaumstoffe sind bekannt. Ihre Herstellung erfolgt üblicherweise durch Umsetzung eines Überschuss an Polyisocyanaten mit Verbindungen mit gegenüber Isocyanatgruppen reaktiven Wasserstoffatomen, insbesondere Polyolen. Durch den Isocyanat-Überschuss, in der Regel mit einem Isocyanatindex von mindestens 150 und größer, werden neben Urethanstrukturen, die durch die Umsetzung von Isocyanaten mit Verbindungen mit reaktiven Wasserstoffatomen entstehen, durch Reaktion der Isocyanatgruppen untereinander oder mit anderen Gruppen, wie zum Beispiel Polyurethangruppen, weitere Strukturen gebildet.

PUR/PIR-Hartschaumstoffe weisen wünschenswerte Eigenschaften in Hinblick auf die Wärmeisolation und Brandverhalten auf. Dies gilt insbesondere für Polyester-basierte PUR/PIR-Hartschaumstoffe (d.h. PUR/PIR-Hartschaumstoffe, die, bezogen auf das Gesamtgewicht der isocyanat-reaktiven Komponenten, mit > 40 Gew.-%, insbesondere > 50 Gew.-% ganz besonders > 55 Gew.-% Polyester-Polyolen oder Polyetherester-Polyolen hergestellt wurden). Aufgrund dieser Eigenschaften werden sie für isolierende Verbundelemente, z.B. Metallsandwichelemente, eingesetzt, z.B. zur Verwendung im Industriehallenbau. Insbesondere werden Verbundelemente zum Bau von Kühlhäusern verwendet.

Damit die gewünschten Schaumeigenschaften, z.B. Rohdichten und Wärmeisolationseigenschaften der PUR/PIR-Hartschäume erzielt werden können, werden dem Reaktionsgemisch physikalische Treibmittel zugesetzt. Kohlenwasserstoffe weisen einerseits Vorteile wie einen günstigen Einfluss auf den Lambda-Wert auf, andererseits bedingen sie auch Nachteile, insbesondere die leichte Entflammbarkeit.

Ein Ziel bei der Herstellung von Kohlenwasserstoff-getriebenen PUR/PIR-Hartschaumstoffen ist es daher, die Menge von eingesetzten brennbaren Kohlenwasserstoffen möglichst gering zu halten, ohne weitere mit dem Treibmittel verbundene Eigenschaften wie z.B. den Schaumdruck, die Maßhaltigkeit, die Dichte und den Schrumpf negativ zu beeinflussen.

Verbundelemente, welche zum Bau von Kühlhäusern eingesetzt werden, sind oft dauerhaft tiefen Temperaturen im Bereich von 0 °C bis -30 °C ausgesetzt. Allerdings hat sich gezeigt, dass Verbundelemente bei dauerhafter Verwendung unter diesen Bedingungen in Bezug auf ihre Dicke schrumpfen. Diese Schrumpfung führt dann unter anderem zu unerwünschten Spannungen in den mit den Verbundelementen errichteten Gebäuden und zu Versatz zwischen einzelnen Verbundelementen und damit verbundenen optischen Mängeln.

Dem PUR/PIR-Reaktionsgemisch werden in der Regel Katalysatorkomponenten zugesetzt, welche geeignet sind, die Treibreaktion, die Urethanreaktion und / oder die Isocyanuratreaktion (Trimerisierung) zu katalysieren. Häufig werden für beide Reaktionen Amin-basierte Katalysatorsysteme eingesetzt, auch der Einsatz von Kaliumsalzen, insbesondere Kaliumacetat, als Trimerisierungskatalysator ist bekannt.

Der Einsatz von Alkali- oder Erdalkaliformiaten in Wasser - oder Ameisensäure- getriebenen Polyurethanschäumen mit einem Index bis 130 ist bekannt. Beispielsweise beschreibt die US 5,286,758 A den Einsatz einer Kombination aus Kaliumformiat und Dimethylcyclohexylamin in wasserkatalysierten Schäumen, wobei eine deutliche Reaktivitätserhöhung, aber auch Verbrennungen im Schaum gefunden werden.

Die WO 07/25888 A beschreibt die Verwendung eines Katalysatorsystems bestehend aus bestimmten Aminoethylethern oder Aminoethylalkoholen sowie Salzen aromatischer oder aliphatischer Carbonsäuren, darunter Kaliumformiat, in PUR/PIR-Systemen. Bei Einsatz solcher Katalysatorsysteme wird für Ameisensäure/Wasser - getriebene PUR/PIR-Schäume ein positiver Effekt auf die Oberfläche gefunden. In der WO 07/25888 wird beschrieben, und auch in den Versuchen gezeigt, dass Ameisensäure als Treibmittel zu PUR/PIR Schäumen mit langen Aushärtezeiten führt. Die von WO 07/25888 vorgeschlagene Lösung ist der Einsatz des oben genannten Katalysatorsystems. Bei Verwendung dieses Katalysatorsystems werden mit Ameisensäure bessere Aushärtezeiten gefunden (ebd, Tabelle 2) als bei Verzicht auf den Aminoethylether (und Ersatz durch ein aliphatisch substituiertes, tertiäres Amin). Wird hingegen auf die Verwendung von Ameisensäure verzichtet und diese durch ein Wasser/Dipropylenglykol - Gemisch ersetzt, wird ein deutlich schlechterer Schaum (spröde, erhöhte Anzahl an Oberflächendefekten) erhalten. Insgesamt offenbart die WO 07/25888 nur für die Verwendung von Ameisensäure in Kombination mit dem Katalysatorsystem Kaliumformiat / Aminoethylether gute Ergebnisse.

Die US 4 277 571 A beschreibt die Herstellung von Kaliumformiat - katlaysierten Polyisocyanurat - Schäumen auf der Basis einer Polyhydroxyverbindung, die Naphthensäuren oder deren Derivate und ein Hydroxy - funktionelles Amin enthält. Die Schäume sollen gute physikalische Eigenschaften, insbesondere Kompressions- und Dimensionsstabilität aufweisen.

Allerdings ist auch bekannt, dass es bei der Verwendung von Naphthensäuren im allgemeinen und/oder Ameisensäure als Treibmittel zu Korrosionsproblemen an der Anlage kommen kann und die Gefahr einer Kohlenmonoxid-Bildung besteht (siehe z.B. "Reactive Polymers Fundamentals and Applications", 2nd Edition, 2013, Johannes Karl Fink, ISBN: 978-1-4557-3149-7). Der Einsatz von Ameisensäure bewirkt vermehrte Harnstoff (Urea) - Bildung, wodurch wiederum die Sprödigkeit erhöht wird und die Haftung zu den Deckschichten im Vergleich zu rein physikalisch-getriebenen Schäumen negativ beeinflusst wird.

Die WO 2012/126916 A beschreibt die Verwendung von Carbonsäuresalzen als Katalysatoren, darunter auch Kaliumformiat, in Polyether-basierten Polyurethanen-Schaumstoffen enthaltend eine spezielle Mischung aus mindestens zwei Polyetherpolyolen und einem Polyesterpolyol in einem Indexbereich von 140 bis 180. Hiermit sollen vorteilhafte Wärmeleitfähigkeits-Charakteristiken erhalten werden.

Ausgehend vom beschriebenen Stand der Technik ist es Ziel dieser Anmeldung, ein Verfahren für die Herstellung von PUR/PIR-Hartschäumen enthaltend physikalische Treibmittel zur Verfügung zu stellen, welches die bekannten PUR/PIR-Systeme im Hinblick auf Schaumdruck und Aushärtung verbessert, ohne dass höhere Mengen des physikalischen Treibmittels eingesetzt werden müssen, gleichzeitig aber auch auf den Einsatz von Ameisensäure als Treibmittel weitestgehend oder sogar ganz verzichtet.

Die genannte Aufgabe konnte nun überraschend gelöst werden durch ein Verfahren zur Herstellung eines PUR/PIR - Hartschaumstoffes umfassend den Schritt i) die Umsetzung eines Reaktionsgemisches enthaltend

A) eine Polyisocyanatkomponente

B) eine Isocyanat-reaktive Komponente umfassend

- 50,0 bis 90,0 Gew.-% wenigstens eines Polyesterpolyols und/oder Polyetheresterpolyols B1.a) mit einer Hydroxylzahl im Bereich von 80 mg KOH/g bis 290 mg KOH/g bestimmt gemäß DIN 53240,
- 1,0 bis 20,0 Gew.-% wenigstens eines Polyetherpolyols B1.b) mit einer Hydroxylzahl im Bereich von 300 mg KOH/g bis 600 mg KOH/g bestimmt gemäß DIN 53240,
- 0,0 bis 5,0 Gew.-% niedermolekularen Isocyanat-reaktive Verbindungen B1.c) mit einer Molmasse $M_n$ kleiner als 400 g/mol,
- 1,0 bis 30,0 Gew.-% wenigstens eines Flammschutzmittels B.3),

- 0,1 bis 4,0 Gew.-% Kaliumformiat B2.a) und
- 0,1 bis 3,0 Gew.-% aminische Komponenten B2.b)

wobei die Angaben in Gew.-% jeweils auf alle Komponenten der isocyanat-reaktiven Zusammensetzung B) bezogen sind,

enthält,
und die Komponente A) ein Gemisch von Diphenylmethan-4,4'-diisocyanat mit seinen Isomeren und höherfunktionellen Homologen enthält, und

dass das Reaktionsgemisch weniger als 0,2 Gew.-% Ameisensäure enthält und einen Isocyanat-Index von ≥ 150 bis ≤ 450 aufweist,

und unter der Maßgabe, dass die aminische Komponente B2.b) und das in Schritt i) umgesetzte Reaktionsgemisch keine aminischen Verbindungen mit der Formel (I) enthält.

Bevorzugt enthält das Reaktionsgemisch weiterhin keine oder nur geringe Anteile an Naphthensäuren. In einer besonders bevorzugten Ausführungsform enthält das Reaktionsgemisch weniger als 0,2 Gew.-% Naphthensäuren (bevorzugt weniger als 0,1 Gew.-% Naphthensäuren, insbesondere bevorzugt keine Naphthensäuren).

In weiteren sehr bevorzugten Ausführungsformen enthält das Reaktionsgemisch keine Naphthensäuren und weniger als 0,2 Gew-.% Ameisensäure, insbesondere weniger als 0,1 Gew.-% Ameisensäure, ganz besonders bevorzugt keine Ameisensäure).

Die isocyanat-reaktive Komponente enthält eine Polyolkomponente B1) umfassend mindestens ein Polyol ausgewählt aus der Gruppe bestehend aus Polyesterpolyolen, Polyetherpolyolen, und Polyetheresterpolyolen.

Bei der Polyolkomponente B1.a) handelt es sich um ein oder mehrere Polyole ausgewählt aus der Gruppe bestehend aus Polyesterpolyolen und Polyetheresterpolyolen.

Der Anteil an Polyolkomponente B1.a) beträgt bevorzugt, bezogen auf das Gesamtgewicht der Komponente B1), mindestens 55 Gew -.% und höchstens 90,0 Gew.-%, ganz besonders bevorzugt mindestens 60 Gew.-% und höchstens 90,0 Gew.-%. In einer bevorzugten Ausführungsform beträgt der Anteil an Polyesterpolyol B1.a) in der Komponente B1) 65 - 90,0 Gew.-%.

Geeignete Polyesterpolyole sind unter anderem Polykondensate aus Di- sowie weiterhin Tri- und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykole, weiterhin 1,2-Propandiol, 1,3-Propandiol, 1,3- und 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden. Es können zusätzlich auch einwertige Alkanole mit verwendet werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. In bestimmten Ausführungsformen ist der Einsatz von Polyestern enthaltend aliphatische Dicarbonsäuren (z.B. Glutarsäure, Adipinsäure, Bernsteinsäure) bevorzugt, insbesondere der Einsatz von rein aliphatischen Polyestern (ohne aromatische Gruppen). Als Säurequelle können auch die entsprechenden Anhydride verwendet werden. Es können zusätzlich auch Monocarbonsäuren wie Benzoesäure und Alkancarbonsäuren mitverwendet werden. Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure und Hydroxystearinsäure.

Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierten Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Die Polyesterpolyole weisen bevorzugt eine Säurezahl 0 - 5 mg KOH/g auf. Dies stellt sicher, dass eine Blockade aminischer Katalysatoren durch Überführung in Ammoniumsalze nur begrenzt erfolgt und die Reaktionskinetik der Schäumreaktion wenig beeinträchtigt wird.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit $\geq 4$ bis $\leq 6$ Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit $\geq 1$ bis $\leq 4$ Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole mit zahlenmittleren Molekulargewichten $M_n$ von vorzugsweise $\geq 18$ g/mol bis $\leq 400$ g/mol, bevorzugt von $\geq 62$ g/mol bis $\leq 200$ g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit > 2 zerewitinoff-aktiven Wasserstoffen, besonders mit zahlenmittleren Funktionalitäten von > 2 bis $\leq 8$, insbesondere von $\geq 3$ bis $\leq 6$ mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molmassen $M_n$ von vorzugsweise $\geq 62$ g/mol bis $\leq 400$ g/mol, insbesondere von $\geq 92$ g/mol bis $\leq 200$ g/mol.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Herstellungsverfahren der Polyole sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben worden. Es ist auch möglich, Polyester- und Polyetherpolyole über Glykolyse von geeigneten Polymer-Rezyklaten zu gewinnen. Geeignete Polyether-Polycarbonatpolyole und ihre Herstellung werden beispielsweise in der EP 2910585 A, [0024] - [0041], beschrieben. Beispiele zu Polycarbonatpolyolen und ihre Herstellung finden sich unter anderem in der EP 1359177 A. Die Herstellung geeigneter Polyetheresterpolyole ist unter anderem in der WO 2010/043624 A und in der EP 1 923 417 A beschrieben.

Bevorzugt sind in B1.a) Polyesterpolyole und/oder Polyetheresterpolyole enthalten, welche Funktionalitäten von $\geq 1,2$ bis $\leq 3,5$, insbesondere $\geq 1,6$ bis $\leq 2,4$, und eine Hydroxylzahl zwischen 100 bis 290 mg KOH/g, besonders bevorzugt 150 bis 270 mg KOH/g und insbesondere bevorzugt von 160 - 260 mg KOH/g, aufweisen. Vorzugsweise besitzen die Polyesterpolyole und Polyetheresterpolyole mehr als 70 mol%, bevorzugt mehr als 80 mol%, insbesondere mehr als 90 mol%, primäre OH-Gruppen.

Die zahlengemittelte Molmasse $M_n$ (auch: Molekulargewicht) wird im Rahmen dieser Erfindung bestimmt durch Gelpermeationschromatographie nach DIN 55672-1 vom August 2007.

Die "Hydroxylzahl" gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-2 (1998).

Die "Säurezahl" wird im Rahmen der vorliegenden Erfindung bestimmt nach der Norm DIN EN ISO 2114:2002-06.

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül).

Im Sinne dieser Anmeldung kann es sich bei "einem Polyesterpolyol" auch um eine Mischung unterschiedlicher Polyesterpolyole handeln, wobei in diesem Fall die Mischung der Polyesterpolyole als gesamtes die genannte OH-Zahl aufweist. Analog gilt dies für die weiteren hier aufgeführten Polyole und ihre Kennzahlen.

Neben den oben beschriebenen Polyolen der Polyolkomponente B1.a) kommen in der Isocyanatreaktiven Komponente B) auch weitere Isocyanat-reaktive Komponenten zum Einsatz. Neben den einen oder mehreren Polyolen B1.a) wird auch ein oder mehrere

Polyetherpolyole eingesetzt.

Der Zusatz von langkettigen Polyolen, insbesondere Polyetherpolyolen, kann die Verbesserung der Fließfähigkeit des Reaktionsgemisches und die Emulgierfähigkeit der treibmittelhaltigen Formulierung bewirken. Für die Herstellung von Verbundelementen können diese die kontinuierliche Produktion von Elementen mit flexiblen oder starren Deckschichten ermöglichen.

Diese langkettigen Polyole weisen Funktionalitäten von $\geq 1,2$ bis $\leq 3,5$ auf und besitzen eine Hydroxylzahl zwischen 10 und 100 mg KOH/g, bevorzugt zwischen 20 und 50 mg KOH/g. Sie besitzen mehr als 70 mol%, bevorzugt mehr als 80 mol%, insbesondere mehr als 90 mol% primäre OH-Gruppen. Die langkettigen Polyole sind bevorzugt Polyetherpolyole mit Funktionalitäten von $\geq 1,2$ bis $\leq 3,5$ und einer Hydroxylzahl zwischen 10 und 100 mg KOH/g.

Der Zusatz von mittelkettigen Polyolen, insbesondere Polyetherpolyolen, und niedermolekularen isocyanat-reaktiven Verbindungen, kann die Verbesserung der Haftung und Dimensionsstabilität des resultierenden Schaumes bewirken. Für die Herstellung von Verbundelementen mit dem erfindungsgemäßen Verfahren können diese mittelkettigen Polyole die kontinuierliche Produktion von Elementen mit flexiblen oder starren Deckschichten ermöglichen. Die mittelkettigen Polyole, bei denen es sich insbesondere um Polyetherpolyole handelt, weisen Funktionalitäten von $\geq 2$ bis $\leq 6$ auf und besitzen eine Hydroxylzahl zwischen 300 und 700 mg KOH/g.

Bei den verwendeten Polyetherpolyolen handelt es sich um die dem Fachmann bekannten, in der Polyurethansynthese einsetzbaren Polyetherpolyole mit den genannten Merkmalen.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxid und/oder Epichlorhydrin an di- oder polyfunktionelle Startermoleküle. Insbesondere bevorzugt ist die Addition von Ethylenoxid und Propylenoxid. Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, Bisphenole, insbesondere 4,4'-Methylenbisphenol, 4,4'-(1-Methylethyliden)bisphenol, 1,4-Butandiol, 1,6-Hexandiol sowie niedermolekulare, Hydroxylgruppen aufweisende Ester derartiger Polyole mit Dicarbonsäuren sowie Oligoether derartiger Polyole.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-l,3-propandiol, 2,2,4-Trimethylpentandiol-l,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Weiterhin können in der Polyolkomponente B1) neben den beschriebenen Polyolen weitere isocyanat-reaktive Verbindungen B1.c) enthalten sein, insbesondere Polyamine, Polyaminoalkohole und Polythiole. Selbstverständlich umfassen die beschriebenen Isocyanat-reaktiven Komponenten auch solche Verbindungen mit gemischten Funktionalitäten. In bevorzugten Ausführungsformen der Komponente B1.c) sind in dieser auch niedermolekulare isocyanat-reaktive Verbindungen enthalten, insbesondere di- oder trifunktionelle Amine und Alkohole, besonders bevorzugt Diole und/oder Triole mit Molmassen $M_n$ kleiner als 400 g/mol, vorzugsweise von 60 bis 300 g/mol. Zum Einsatz kommen z.B. Triethanolamin, Diethylenglykol, Ethylenglykol, Glycerin sowie niedermolekulare Ester oder Halbester dieser Alkohole, z.B. der Halbester von Phthalsäureanhydrid und Diethylenglykol. Falls zur Herstellung der PUR/PIR-Hartschaumstoffe solche niedermolekularen isocyanat-reaktiven Verbindungen Anwendung finden, z.B. in der Funktion als Kettenverlängerungsmittel und/oder Vernetzungsmittel, kommen diese zweckmäßigerweise in einer Menge von maximal 5 Gew.-%, bezogen auf das Gesamtgewicht der Komponente B1), zum Einsatz. Verbindungen, die aufgrund ihrer Struktur sowohl unter die Definition der Komponente B1.c) als auch unter eine der Definitionen der oben beschriebenen Polyolverbindungen B1.a) oder B1.b) fallen, werden mengenmäßig zu der Komponente B1.a) oder B1.b) und nicht zu der Komponente B1.c) gerechnet.

Eine bevorzugte Polyolkomponente B1) für die mit diesem Verfahren hergestellten Schäume enthält 55 bis 90,0 Gew.-% der Polyolkomponente B1.a), welche ausgewählt ist aus einer oder mehreren Polyolen der Gruppe bestehend aus Polyesterpolyolen und Polyetheresterpolyolen in einem Hydroxylzahlbereich zwischen 100 und 290 mg KOH/g und mit Funktionalitäten von $\geq$ 1,2 bis $\leq$ 3,5, insbesondere $\geq$ 1,6 bis $\leq$ 2,4, 1,0 bis 10 Gew.-%, insbesondere 1,0 bis 6 Gew.-%, mittelkettige Polyetherpolyole mit Funktionalitäten von $\geq$ 2 bis $\leq$ 6 und einer Hydroxylzahl zwischen 300 und 600 mg KOH/g (B1.b) weiterhin können 0 bis 25 Gew.-%, bevorzugt 1 bis 20 Gew.-%, langkettige Polyetherpolyole B1.b) mit einer Funktionalität von $\geq$ 1,2 bis $\leq$ 3,5 und einer Hydroxylzahl zwischen 10 und 100 mg KOH/g, 0,0 bis 5,0 Gew.-%, niedermolekulare Isocyanat-reaktive Verbindungen mit einer Molmasse $M_n$ kleiner als 400 g/mol (B1.c) enthalten sein.

Die vorliegende Erfindung betrifft einen Polyurethan-/Polyisocyanurat-Hartschaum erhältlich aus der Reaktion eines Reaktionsgemisches aus

B) einer isocyanatreaktiven Zusammensetzung umfassend

B1.a) 50,0 bis 90,0 Gew.-% wenigstens eines Polyesterpolyols und/oder Polyetheresterpolyols mit einer Hydroxylzahl im Bereich von 80 mg KOH/g bis 290 mg KOH/g bestimmt gemäß DIN 53240, B1.b) 1,0 bis 20,0 Gew.-% wenigstens eines Polyetherpolyols mit einer Hydroxylzahl im Bereich von 300 mg KOH/g bis 600 mg KOH/g bestimmt gemäß DIN 53240,

B1.c) 0,0 bis 5,0 Gew.-%, insbesondere 1,0 - 5,0 Gew.-%, niedermolekulare Isocyanat-reaktive Verbindungen mit einer Molmasse $M_n$ kleiner als 400 g/mol

B3.b) 1,0 bis 30,0 Gew.-% wenigstens eines Flammschutzmittels,

B2.a) 0,1 bis 4,0 Gew.-% Kaliumformiat

B2.b) 0,1 bis 3,0 Gew-% Aminische Katalysatorkomponente

wobei die Angaben in Gew.-% jeweils auf alle Komponenten der isocyanatreaktiven Zusammensetzung B) bezogen sind; mit

A) einem Gemisch von Diphenylmethan-4,4'-diisocyanat mit Isomeren und höherfunktionellen Homologen, wobei der Isocyanat-Index $\geq$ 150 bis $\leq$ 450 beträgt,

in Gegenwart von

C) einem physikalischen Treibmittel,

dadurch gekennzeichnet,

dass die Katalysatorkomponente B2.a) Kaliumformiat und B2.b) ein Amin, ausgewählt aus der Gruppe bestehend aus Dimethylbenzylamin und Dimethylcyclohexylamin enthält, und

dass das Reaktionsgemisch weniger als 0,2 Gew.-% Ameisensäure enthält, und

unter der Maßgabe, dass die aminische Komponente B2.b) und das in Schritt i) umgesetzte Reaktionsgemisch keine aminischen Verbindungen mit der Formel (I) enthält.

In einer besonders bevorzugten Ausführungsform des oben beschriebenen Reaktionsgemisches ist das Polyetherpolyol B1.b) ein mit einem aromatischen Amin gestartetes Polyetherpolyol.

Die isocyanat-reaktive Komponente B) bzw. das Reaktionsgemisch kann Hilfs- und Zusatzstoffe B3) enthalten. Diese werden entweder mit den anderen Komponenten vorgelegt oder während der Herstellung der PUR/PIR-Hartschäume der Mischung der Komponenten zudosiert.

Bevorzugt umfassen die Hilfs- und Zusatzstoffe B3) Emulgatoren (B3.a). Als geeignete Emulgatoren, die auch als Schaumstabilisatoren dienen, können beispielsweise alle handelsüblichen durch Polyetherseitenketten modifizierten Silikonoligomere eingesetzt werden, die auch zur Herstellung von herkömmlichen Polyurethanschäumen eingesetzt werden. Falls Emulgatoren eingesetzt werden, handelt es sich um Mengen von bevorzugt bis zu 8 Gew.-%, besonders bevorzugt von 0,5 bis 7,0 Gew.-%, jeweils bezogen auf das Gesamtgewicht der Isocyanat-reaktiven Zusammensetzung. Bevorzugte Emulgatoren sind Polyetherpolysiloxancopolymerisate. Solche sind beispielsweise unter der Bezeichnung Tegostab® B84504 und B8443 der Firma Evonik, Niax* L-5111 der Firma Momentive Performance Materials, AK8830 der Firma Maystar sowie Struksilon 8031 der Fa. Schill und Seilacher am Markt erhältlich. Auch silikonfreie Stabilisatoren, wie bspw. das Produkt LK 443 von Air Products, können eingesetzt werden.

Zur Verbesserung der Brandbeständigkeit werden den Isocyanat-reaktiven Zusammensetzungen zudem Flammschutzmittel (B3.b) zugesetzt. Derartige Flammschutzmittel sind dem Fachmann im Prinzip bekannt und beispielsweise in "Kunststoffhandbuch", Band 7 "Polyurethane", Kapitel 6.1 beschrieben. Dies können beispielsweise halogenierte Polyester und Polyole, brom- und chlorhaltige Paraffine oder Phosphorverbindungen, wie zum Beispiel die Ester der Orthophosphorsäure und der Metaphosphorsäure, die ebenfalls Halogen enthalten können, sein. Bevorzugt werden bei Raumtemperatur flüssige Flammschutzmittel gewählt. Beispiele sind Triethylphosphat, Diethylethanphosphonat, Kresyldiphenylphosphat, Dimethylpropanphosphonat und Tris($\beta$-chlorisopropyl)phosphat. Besonders bevorzugt sind Flammschutzmittel ausgewählt aus der Gruppe bestehend aus Tris(chloro-2-propyl)-phosphat (TCPP) und Triethylphosphat (TEP) und Mischungen daraus. Erfindungsgemäß werden Flammschutzmittel in einer Menge von 1 bis 30 Gew.-%, besonders bevorzugt 5 bis 30 Gew.-%, bezogen auf das Gesamtgewicht der Isocyanat-reaktiven Zusammensetzung B) eingesetzt. Um bestimmte Eigenschaftsprofile (Viskosität, Sprödigkeit, Brennbarkeit, Halogengehalt) zu erzielen, kann es auch günstig sein, unterschiedliche Flammschutzmittel miteinander zu kombinieren. In bestimmten Ausführungsformen ist die Anwesenheit von Triethylphosphat (TEP) im Flammschutzmittelgemisch oder als alleiniges Flammschutzmittel besonders vorteilhaft.

Weiterhin umfasst die Komponente B3) auch alle anderen Additive (B3.c), die Isocyanat-reaktiven Zusammensetzungen zugesetzt werden können. Beispiele für solche Additive sind Zellregulantien, Thixotropiermittel, Weichmacher und Farbstoffe.

Die Katalysatorkomponente B2) enthält erfindungsgemäß 0,2 - 4,0 Gew.-% Kaliumformiat B2.a).

Dieses wird oft als Lösung, z.B. in Diethylenglykol / Monoethylenglykol, eingesetzt. Erfindungsgemäß wird Kaliumformiat in einer Konzentration von 0,2 - 4,0 Gew.-%, bevorzugt 0,4 - 2,0 Gew.-% (bezogen auf die Masse reines Kaliumformiat in der Komponente B) eingesetzt.

Erfindungsgemäß enthält die Katalysatorkomponente B2) weiterhin

B2.b) einen aminischen Katalysator, welcher nicht mit der Formel (I) beschrieben werden kann. Der aminische Katalysator ist beispielsweise ausgewählt aus der Gruppe bestehend aus Amidinen, wie 2,3-Dimethyl-3,4,5,6-tetrahydropyrimidin, oder tertiäre Amine, wie z.B. Triethylamin, Tributylamin, Dimethylcyclohexylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Bis-(dimethylaminopropyl)-harnstoff, Dimethylpiperazin, 1,2-Dimethyl-imidazol, N,N',N''-Tris-(dimethylaminopropyl)-hexahydrotriazin, 1-Aza-bicyclo-(3,3,0)-octan und 1,4-Diaza-bicyclo-(2,2,2)-octan, und Alkanolaminverbindungen, die nicht unter die Formel (I) fallen, wie Tris(dimethylaminomethyl)phenol, Triethanolamin, Triisopropanolamin, und N-Ethyldiethanolamin. Besonders geeignete Verbindungen sind ausgewählt aus der Gruppe umfassend tertiäre Amine, wie Triethylamin, Tributylamin, Dimethylcyclohexylamin, Dimethylbenzylamin, N,N,N',N'- Tetramethylethylendiamin, Pentamethyldiethylentriamin, Dimethylpiperazin, 1,2-Dimethyl-imidazol und Alkanolaminverbindungen, die nicht unter die Formel (I) fallen, wie Tris(dimethylaminomethyl)phenol, Triethanolamin, Triisopropanolamin, und N-Ethyldiethanolamin.

Bevorzugt enthält der aminische Katalysator mindestens ein Amin der Formel $NR^1R^2R^3$, wobei $R^1$, $R^2$ und $R^3$ unabhängig voneinander jeweils für eine Alkyl- oder Arylgruppe stehen, bevorzugt für eine Methyl-, Ethyl-, Propyl-, Cyclohexyl-, Benzyl- oder Phenylgruppe.

Bevorzugt enthält die Komponente B2.b) Dimethylbenzylamin, (DMBA, N,N-dimethyl-1-phenylmethanamin nach IUPAC) und/oder Dimethylcyclohexylamin, (DMCHA, N,N-Dimethylcyclohexanamin nach IUPAC), insbesondere Dimethylcyclohexylamin. Insbesondere enthält die Komponente B2.b) neben Dimethylbenzylamin und/oder Dimethylcyclohexylamin keine weiteren aminischen Katalysatoren.

Neben den oben genannten Verbindungen B2.a) und B2.b) können weitere Katalysatoren in B2) vorhanden sein, um z.B. die Treibreaktion, die Urethanreaktion und / oder die Isocyanuratreaktion (Trimerisierung) katalysieren.

Neben den oben genannten Katalysatorkomponenten besonders geeignet sind insbesondere noch eine oder mehrere katalytisch aktive Verbindungen ausgewählt aus

B2.c) Metallcarboxylaten, welche unterschiedlich von Kaliumformiat sind, insbesondere Alkali- oder Erdalkalimetalle, insbesondere Natriumacetat, Natriumoctoat, Kaliumacetat, Kaliumoctoat, sowie Zinncarboxylate, z.B. Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat und Dioctylzinndiacetat und Ammoniumcarboxylate. Insbesondere bevorzugt sind Natrium-, Kalium- und Ammoniumcarboxylate. Bevorzugte Carboxylate sind Ethylhexanoate (=Octoate), Proprionate und Acetate.

Die Katalysatorkomponente enthält erfindungsgemäß keine aminischen Verbindungen B2.d) mit der Formel (I)

$$R^1N(CH_3)(CH_2CH_2OR^2) \qquad (I)$$

wobei

R$^1$ für CH$_3$, CH$_2$-CH$_2$-N(CH$_3$)$_2$ oder CH$_2$-CH$_2$OH, und
R$^2$ für H, CH$_2$-CH$_2$OH oder CH$_2$-CH$_2$N(CH$_3$)$_2$

steht.

Insbesondere enthält die Katalysatorkomponente sowie das gesamte Reaktionsgemisch keine der folgenden Verbindungen: Bis-(dimethylaminoethyl)ether, N,N,N-Trimethylaminoethylethanolamin, N,N,N-Trimethyl-N-hydroxyethyl-bis(aminoethyl)ether, N,N-Dimethylaminoethoxyethanol oder Dimethylethanolamin. Entgegen den Aussagen abgeleitet aus dem bisherigem Stand der Technik wurde überraschend gefunden, dass sich die Abwesenheit dieser Verbindungen positiv auf die Oberflächenbeschaffenheit der PUR/PIR - Hartschaumstoffe auswirkt.

Die Katalysatorkomponenten können dem Reaktionsgemisch zudosiert oder auch ganz oder teilweise in der Isocyanat-reaktiven Komponente B) vorgelegt werden.

Die Reaktivität des Reaktionsgemisches wird i.d.R. mittels der Katalysatorkomponente auf die Bedürfnisse angepasst. So verlangt die Herstellung von dünnen Platten ein Reaktionsgemisch mit einer höheren Reaktivität als die Herstellung von dickeren Platten. Typische Parameter sind die Startzeit und die Abbindezeit als Maß für die Zeit, zu der das Reaktionsgemisch zu reagieren beginnt, und für den Zeitpunkt, an dem ein hinreichend stabiles Polymernetzwerk gebildet ist. Die zur Herstellung des Hartschaumstoffes nötigen Katalysatoren B2.a), B2.b) und gegebenenfalls B2.c) werden in einer bevorzugten Ausführungsform in solcher Menge eingesetzt, dass z.B. auf kontinuierlich produzierenden Anlagen Elemente mit flexiblen und starren Deckschichten mit Geschwindigkeiten bis zu 80 m/min je nach Elementstärke produziert werden können.

Bevorzugt wird eine Kombination aus den Katalysatorkomponenten Kaliumformiat B2.a) und aminischen Katalysatoren B2.b) im molaren Verhältnis n(Kaliumformiat)/n(Amin) zwischen 0,5 und 20 in dem Reaktionsgemisch verwendet. Kurze Abbindezeiten können zum Beispiel mit mehr als 0,2 Gew.-% Kaliumformiat bezogen auf alle Komponenten des Reaktionsgemisches erzielt werden.

Der Anteil an reinem Kaliumformiat in der Katalysatormischung beträgt bevorzugt 15 - 90 Gew.-%, besonders bevorzugt 30 - 80 Gew.-%. Bevorzugt werden neben Kaliumformiat keine weiteren Katalysatoren eingesetzt, die die Trimerisierungsreaktion katalysieren. Besonders bevorzugt enthält die Katalysatormischung neben Kaliumformiat keine weiteren Metallcarboxylate.

Das Reaktionsgemisch enthält weiterhin so viel Treibmittel C) wie zur Erzielung einer dimensionsstabilen Schaummatrix und der gewünschten Rohdichte nötig ist. In der Regel sind dies 0,5 - 30,0 Gewichtsteile Treibmittel bezogen auf 100,0 Gewichtsteile der Komponente B. Als Treibmittel werden vorzugsweise physikalische Treibmittel ausgewählt aus wenigstens einem Mitglied der Gruppe bestehend aus Kohlenwasserstoffen, halogenierten Ethern und perfluorierten und teilfluorierten Kohlenwasserstoffen mit 1 bis 8 Kohlenstoffatomen eingesetzt. Unter "physikalischen Treibmitteln" werden im Rahmen der vorliegenden Erfindung solche Verbindungen verstanden, die aufgrund ihrer physikalischen Eigenschaften leicht flüchtig sind und nicht mit der Polyisocyanatkomponente reagieren. Bevorzugt sind die erfindungsgemäß einzusetzenden physikalischen Treibmittel ausgewählt aus Kohlenwasserstoffen (z. B. n-Pentan, iso-Pentan, cycloPentan, Butan, Isobutan, Propan), Ethern (z. B. Methylal), halogenierten Ethern, (per)fluorierte Kohlenwasserstoffe mit 1 bis 8 Kohlenstoffatomen (z. B. Perfluorhexan), sowie deren Gemischen untereinander. Auch bevorzugt ist der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en), sowie der Einsatz von Kombinationen dieser Treibmittel. In besonders bevorzugten Ausführungsformen wird als Treibmittel C) ein Pentanisomer oder ein Gemisch verschiedener Pentanisomeren eingesetzt. Außerordentlich besonders bevorzugt wird eine Mischung aus Cyclopentan und Isopentan als Treibmittel C) eingesetzt. Weitere Beispiele für bevorzugt eingesetzte Fluorkohlenwasserstoffe sind z.B. HFC 245fa (1,1,1,3,3-Pentafluorpropan), HFC 365mfc (1,1,1,3,3-Pentafluorbutan), HFC 134a oder deren Mischungen verwendet. Es können auch verschiedene Treibmittelklassen kombiniert werden.

Insbesondere bevorzugt ist auch der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4oder2)-(trifluormethyl)pent-2-en und/oder 1,1,1,3,4,4,5,5,5- Nonafluor-4(oder2)-(trifluormethyl)pent-2-en), allein oder in Kombination mit anderen Treibmitteln. Diese haben den Vorteil, ein besonders niedriges Ozonabbaupotential (ODP) aufzuweisen und ein besonders niedriges Treibhauspotential (GWP) zu besitzen.

Das Reaktionsgemisch zeichnet sich erfindungsgemäß dadurch aus, dass es weniger als 0,20 Gew.-%, bevorzugt weniger als 0,10 Gew.-% Ameisensäure und insbesondere bevorzugt keine Ameisensäure enthält. Chemische Treibmittel D) können enthalten sein, jeweils unter der Maßgabe, dass weniger als 0,20 Gew.-%, bevorzugt weniger als 0,10 Gew.-% Ameisensäure, insbesondere bevorzugt keine Ameisensäure enthalten sind.

In einer Ausführungsform enthält das Reaktionsgemisch das chemische Treibmittel Wasser. In einer bevorzugten Ausführungsform enthält das Reaktionsgemisch > 0,30 Gew.-%, insbesondere ≥ 0,35 Gew.-% Wasser.

In einer weiterhin bevorzugten Ausführungsform enthält das Reaktionsgemisch zusätzlich zu den oben genannten physikalischen Treibmitteln ein Carbamat, welches unter Reaktionsbedingungen Kohlendioxid abspalten kann. Bevorzugt ist z.B. der Einsatz von 2-Hydroxypropylcarbamat. Überraschend wird gefunden, dass der positive Effekt sowohl auf den Schaumdruck als auch auf die Aushärtung in Gegenwart von Carbamat besonders ausgeprägt ist.

Die Komponente A) ist ein Polyisocyanat, also ein Isocyanat mit einer NCO-Funktionalität von ≥ 2. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat (MDI) und/oder höhere Homologe, 1,3- und/oder l,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Als Polyisocyanatkomponente A) werden bevorzugt Mischungen der Isomeren des Diphenylmethandiisocyanats ("monomeres MDI", abgekürzt "mMDI") und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenyl-polymethylen-polyisocyanate, d.h. Gemische der höherkernigen Homologen des Diphenyl-methylen-diisocyanates, welche eine NCO - Funktionalität f > 2 aufweisen und sich durch folgende Summenformel beschreiben lassen: $C_{15}H_{10}N_2O_2[C_8H_5NO]_n$ , wobei n = ganze Zahl > 0, bevorzugt n = 1, 2, 3 und 4, ist. Höherkernige Homologe $C_{15}H_{10}N_2O_2[C_8H_5NO]_m$, m = ganze Zahl $\geq$ 4) können ebenfalls im Gemisch aus organischen Polyisocyanaten A) enthalten sein. Als Polyisocyanat-Komponente A) weiterhin bevorzugt sind Mischungen aus mMDI und/oder pMDI mit maximal bis zu 20 Gew.-%, mehr bevorzugt maximal 10 Gew.-% an weiteren, für die Herstellung von Polyurethanen bekannten aliphatischen, cycloaliphatischen und insbesondere aromatischen Polyisocyanaten, ganz besonders TDI.

Die Polyisocyanat-Komponente A) zeichnet sich weiterhin dadurch aus, dass sie vorzugsweise eine Funktionalität von mindestens 2, insbesondere mindestens 2,2, besonders bevorzugt mindestens 2,4, und ganz besonders bevorzugt mindestens 2,7 aufweist.

Für den Einsatz als Polyisocyanat-Komponente sind polymere MDI-Typen im Hartschaum gegenüber monomeren Isocyanaten besonders bevorzugt.

Der NCO-Gehalt der Polyisocyanatkomponente A) beträgt bevorzugt von $\geq$ 29,0 Gew.-% bis $\leq$ 33,0 Gew.%, und weist bevorzugt eine Viskosität bei 25 °C von $\geq$ 80 mPas bis $\leq$ 2900 mPas, besonders bevorzugt von $\geq$ 95 mPas bis $\leq$ 850 mPas bei 25°C auf.

Der NCO-Wert (auch: NCO-Gehalt, Isocyanatgehalt) wird bestimmt mittels EN ISO 11909:2007. Falls nicht anders angegeben, handelt es sich um die Werte bei 25°C.

Bei Angaben zur Viskosität handelt es sich um die dynamische Viskosität, bestimmt mittels DIN EN ISO 3219:1994-10 "Kunststoffe - Polymere/Harze in flüssigem, emulgiertem oder dispergiertem Zustand".

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-l,8-octandiisocyanat (Nonantriisocyanat) oder Triphenylmethan-4,4',4"-triisocyanat mit eingesetzt werden.

Statt oder zusätzlich zu den oben genannten Polyisocyanaten können auch geeignete NCO-Präpolymere als organische Polyisocyanat-Komponente A) eingesetzt werden. Die Präpolymere sind herstellbar durch Umsetzung eines oder mehrerer Polyisocyanate mit einem oder mehreren Polyolen, entsprechend den unter den Komponenten A) beschriebenen Polyolen. Es ist möglich, dass das Isocyanat ein Präpolymer ist, welches erhältlich ist durch Reaktion eines Isocyanats mit einer NCO-Funktionalität von $\geq$ 2 und Polyolen mit einem Molmasse Mn von $\geq$ 62 g/mol bis $\leq$ 8000 g/mol und OH-Funktionalitäten von $\geq$ 1,5 bis $\leq$ 6,0.

Aus Isocyanat-reaktiver Komponente B) und Polyisocyanatkomponente A) wird durch Mischung ein Reaktionsgemisch erzeugt, welche zu dem PUR/PIR-Hartschaum führt. Die Herstellung erfolgt im Allgemeinen über Vermischung aller Komponenten über übliche Hoch- oder Niederdruckmischköpfe.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen}) * 100$$

Im Reaktionsgemisch werden die Anzahl der NCO-Gruppen im Isocyanat und die Anzahl der gegenüber Isocyanaten reaktiven Gruppen so eingestellt, dass sie zu einer Kennzahl (Index) von 150 bis 450 führen.

In einer Ausführungsform der erfindungsgemäßen Polyurethan-/Polyisocyanurat-Schäume weisen diese eine Kernrohdichte von $\geq$ 30 kg/m$^3$ bis $\leq$ 50 kg/m$^3$ auf. Die Dichte wird gemäß DIN EN ISO 3386-1-98 bestimmt. Vorzugsweise liegt die Dichte in einem Bereich von $\geq$ 33 kg/m$^3$ bis $\leq$ 45 kg/m$^3$ und besonders bevorzugt von $\geq$ 36 kg/m$^3$ bis $\leq$ 42 kg/m$^3$.

Ein weiterer Gegenstand der vorliegenden Erfindung ist die Verwendung der erfindungsgemäßen PUR/PIR-Schäume zur Herstellung von Verbundelementen, insbesondere Metallverbundelementen. Zu Details einzelner Ausführungsformen wird zur Vermeidung unnötiger Wiederholungen auf die Erläuterungen des erfindungsgemäßen Verfahrens verwiesen.

Metallverbundelemente sind Sandwich-Verbundelemente, bestehend aus wenigstens zwei Deckschichten und einer dazwischen liegenden Kernschicht. Im Besonderen bestehen Metall-Schaumstoff-Verbundelemente wenigstens aus zwei Deckschichten aus Metall und einer Kernschicht aus einem Schaumstoff, z.B. einem Polyurethan (PUR)-Hartschaumstoff, bzw. aus einem Polyurethan/Polyisocyanurat (PUR/PIR)-Hartschaumstoff. Derartige Metall-Schaumstoff-Verbundelemente sind aus dem Stand der Technik hinlänglich bekannt und werden auch als Metallverbundelemente bezeichnet. Als Deckschichten werden dabei neben beschichteten Stahlblechen auch Edelstahl-, Kupfer- oder Aluminiumbleche eingesetzt. Zwischen der Kernschicht und den Deckschichten können weitere Schichten vorgesehen sein. Beispielsweise können die Deckschichten, z.B. mit einem Lack, beschichtet werden.

Beispiele für die Anwendung derartiger Metallverbundelemente sind ebene oder linierte Wandelemente sowie profilierte Dachelemente für den Industriehallen- und Kühlhausbau ebenso wie für LKW-Aufbauten, Hallentüren oder Transportcontainer.

Die Herstellung dieser Metallverbundelemente kann kontinuierlich (bevorzugt) oder diskontinuierlich erfolgen. Vorrichtungen zur kontinuierlichen Herstellung sind z.B. aus DE 1 609 668 A oder DE 1 247 612 A bekannt. Eine kontinuierliche Anwendung erfolgt beim Einsatz von Doppelbandanlagen. Das Reaktionsgemisch wird beim Doppelbandverfahren nach dem Stand der Technik beispielsweise mittels oszillierenden Auftragsvorrichtungen, z.B. Gießharken, oder einer oder mehreren feststehenden Gießvorrichtungen, z.B. mittels Löcher oder andere Bohrungen aufweisenden Gießharken oder mittels Spalten und/oder Schlitze aufweisenden Düsen oder mittels Mehrfingertechnologie, auf die untere Deckschicht aufgetragen. Siehe hierzu beispielsweise die EP 2 216 156 A1, WO 2013/107742 A, WO 2013/107739 A und die WO 2017/021463 A.

Die folgende Ausführungsform ist nicht erfindungsgemäß und dient lediglich der Veranschaulichung und betrifft ein Verfahren zur Herstellung eines Verbundelementes, wobei ein erfindungsgemäßes Reaktionsgemisch mittels einer Gießvorrichtung auf eine bewegte Deckschicht aufgebracht wird.

**Beispiele**

Zur Herstellung der Hartschäume werden folgende Verbindungen eingesetzt:

| | |
|---|---|
| B1.a-P1 | Aliphatisches Polyesterpolyol hergestellt durch Umsetzung eines Gemisches aus Adipinsäure, Bernsteinsäure und Glutarsäure mit Ethylenglykol, OH-Zahl 216 mg KOH/g der Fa. Covestro Deutschland AG |
| B1.a-P2 | Stepanpol PS 2412, aromatisches Polyesterpolyol basierend auf Phthalsäureanhydrid und Diethylenglycol, enthaltend 3-10 wt-% TCPP, OH-Zahl 240 mg KOH/g der Fa. Stepan |
| B1.b-P3 | Polyetherpolyol auf Basis von Propylenglykol, Propylenoxid und Ethylenoxid mit 90% primären OH-Gruppen und einer OH-Zahl von 28 mg KOH/g der Fa. Covestro Deutschland AG. |
| B1.b-P4 | Polyetherpolyol auf Basis von Ethylenglykol, Sucrose und Propylenoxid mit einer OH-Zahl von 440 mg KOH/g der Fa. Covestro Deutschland AG. |
| B1.b-P5 | Polyetherpolyol auf Basis von Sucrose, Propylenglykol, Ethylenglykol und Propylenoxid mit einer OH-Zahl von 380 mg KOH/g der Fa. Covestro Deutschland AG. |
| B1.b-P6 | Polyetherpolyol auf Basis von Ethylendiamin und Propylenoxid mit einer OH-Zahl von 620 mg KOH/g der Fa. Covestro Deutschland AG. |
| B3.b-1 | Tris(1-chloro-2-propyl)-phosphat der Fa. Lanxess GmbH (Komponente B3.b) |
| B3.b-2 | Triethylphosphat der Fa. Lanxess GmbH |
| B3.a-1 | Polyetherpolysiloxancopolymerisat Tegostab® B8443 der Fa. Evonik |
| B1-P7 | Rizinusöl |
| A-1 | Desmodur® 44V70L polymeres Polyisocyanat auf Basis 4,4-Diphenylmethandiisocyanat mit einem NCO-Gehalt von ca. 31,5 Gew.-% Fa. Covestro Deutschland AG |
| B2.c-1 | Kaliumacetat (Kaliumethanoat nach IUPAC), 25 wt-% in Diethylenglykol |
| B2.a-1 | Kaliumformiat (Kaliummethanoat nach IUPAC) 36 wt-% in Monoethylenglykol |
| B2.b-1 | Dimethylbenzylamin (N,N-dimethyl-1-phenylmethanamin nach IUPAC) |
| B2.b-2 | Dimethylcyclohexylamin (N,N-Dimethylcyclohexanamin nach IUPAC) |
| B2.d-1 | Bis(2-dimethylaminoethyl)ether (Niax® A1, 70% in Dipropylenglycol, Momentive Performance Materials) (aminische Verbindung mit der Strukturformel Formel (I)) |
| B2.d-2 | 2,2'-Dimorpholinyldiethylether (DMDEE, aminische Verbindung mit der Strukturformel Formel (I)) |

(fortgesetzt)

| C-1 | n-Pentan [F+;Xn;N] |
| D-1 | Wasser |

Messung der Reaktions- und Produkteigenschaften der hergestellten PUR/PIR-Hartschäume:

Der Schaumdruck und die Fließeigenschaften während der Schaumreaktion können nach dem Fachmann bekannten Verfahren in einem Hartschaumrohr ermittelt werden. Hierzu wird das Reaktionsgemisch analog zu obiger Beschreibung in einem Pappbecher hergestellt und der gefüllte Pappbecher in ein temperiertes Rohr von unten eingeführt. Das Steigprofil sowie der sich ausbildende Schaumdruck werden während der Reaktion kontinuierlich erfasst.
Die Messung der Rohdichte wurde nach der DIN EN ISO 845 (Oktober 2009) durchgeführt.

Messung der Abbindezeit:

Die Abbindezeit ist generell diejenige Zeit, nach der zum Beispiel bei der Polyaddition zwischen Polyol und Polyisocyanat ein theoretisch unendlich ausgedehntes Polymer entstanden ist (Übergang vom flüssigen in den festen Zustand).. Die Abbindezeit lässt sich experimentell dadurch ermitteln, dass in das aufschäumende Reaktionsgemisch, hier hergestellt in einem Testpäckchen mit einer Grundfläche von 20x20 cm$^2$, in kurzen Abständen ein dünner Holzstab eingetaucht wird. Die Zeit vom Vermischen der Komponenten bis zu dem Zeitpunkt, bei dem am Stab beim Herausziehen Fäden hängenbleiben, ist die Abbindezeit.

Messung der Klebfreizeit:

Nach erfolgtem Austrag wird die Klebfreizeit der Schaumoberfläche nach TM 1014:2013 (FEICA) ermittelt.

Messung der Eindrucktiefe:

Die Eindrucktiefe an frisch hergestellten Laborschäumen in Testpäckchen mit einer Grundfläche von 20x20 cm$^2$ wird über die Messung der Eindringtiefe eines Stempels mit definiertem Stempeldruck nach den angegebenen Zeitspannen während der Aushärtephase bestimmt.

**Beispiele** 1 - 12): Herstellung von Pentan-getriebenen Schäumen

Alle Schäume werden mittels Handvermischung im Labormaßstab in Testpäckchen mit Grundfläche 20x20 cm$^2$ hergestellt (Formulierungen und Reaktionseigenschaften siehe Tabelle 1 und Tabelle 3). Die Polyolkomponente enthaltend die Polyole, Additive und Katalysatoren werden vorgelegt. Kurz vor der Vermischung wird die Polyolkomponente auf 23-25°C temperiert, wohingegen die Polyisocyanatkomponente auf eine konstante Temperatur von 30-35°C gebracht wird. Anschließend wird unter Rühren die Polyisocyanatkomponente zur Polyolmischung gegeben, zu der die zur Erreichung einer Kernrohdichte von 37 - 38 kg/m$^3$ benötigte Menge an Pentan zuvor zugewogen worden ist. Die Mischzeit beträgt 6 sec und die Mischgeschwindigkeit des Pendraulik-Rührers beträgt 4200 min-1. Nach 2,5 bzw. 5 Minuten wird die Schaumhärte mittels einer Eindruck-Methode und nach 8-10 Minuten die maximale Kerntemperatur bestimmt. Der Schaum wird anschließend für weitere 24 Stunden 20 bei 23°C gelagert, damit dieser nachreagieren kann.

Tabelle 1: Formulierung der PUR/PIR-Hartschäume (nicht erfindungsgemäß)

| | | Beispiel 1* | Beispiel 2* | Beispiel 3* | Beispiel 4* | Beispiel 5* | Beispiel 6* | Beispiel 7* | Beispiel 8* | Beispiel 9* | Beispiel 10* |
|---|---|---|---|---|---|---|---|---|---|---|---|
| B1.a-P1 | pbw | 73 | 73 | 73 | 73 | 73 | 73 | | | 83 | 83 |
| B1.a-P2 | | | | | | | | 83 | 83 | | |
| B1.b-P3 | pbw | 12 | 12 | 12 | 12 | 12 | 12 | 5 | 5 | 5 | 5 |
| B3.b-1 | pbw | 15 | 15 | 15 | 15 | 15 | 15 | | | | |
| B3.b-2 | | | | | | | | 10,5 | 10,5 | 10,5 | 10,5 |
| D-1 | pbw | 0,80 | 0,80 | 0,80 | 0,80 | 0,80 | 0,80 | 0,50 | 0,50 | 0,50 | 0,50 |
| B3.a-1 | pbw | 3,00 | 3,00 | 3,00 | 3,00 | 3,00 | 3,00 | 3,00 | 3,00 | 3,00 | 3,00 |
| B2.b-1 | pbw | 1,20 | 1,20 | | | | | 1,50 | 1,20 | 1,50 | 1,20 |
| B2.c-1 | pbw | 3,50 | | | | | 3,50 | 3,00 | | 3,00 | |
| B2.b-2 | pbw | | | 0,30 | | | 0,30 | | | | |
| B2.a-1 | pbw | | 2,30 | 2,30 | 2,30 | 2,30 | | | 2,00 | | 2,10 |
| B2.d-1 | pbw | | | | | 0,40 | | | | | |
| B2.d-2 | pbw | | | | 3,60 | | | | | | |
| C-1 | pbw | 13,30 | 12,30 | 12,20 | 12,40 | 12,30 | 13,20 | 13,20 | 12,80 | 13,20 | 12,80 |
| C-1 | wt-% | 4,10 | 3,80 | 3,80 | 3,80 | 3,80 | 4,10 | 4,10 | 4,00 | 4,10 | 4,00 |
| A-1 | pbw | 202,75 | 201,87 | 201,87 | 201,87 | 202,72 | 202,75 | 200,00 | 200,00 | 200,00 | 200,00 |
| Index | | 350,0 | 350,0 | 350,0 | 350,0 | 350,0 | 350,0 | 311,6 | 312,3 | 337,0 | 336,13 |

Tabelle 2: Reaktions- und Produkteigenschaften der hergestellten PUR/PIR-Hartschäume

| | | Beispiel 1* | Beispiel 2 | Beispiel 3 | Beispiel 4* | Beispiel 5* | Beispiel 6* | Beispiel 7* | Beispiel 8 | Beispiel 9* | Beispiel 10 |
|---|---|---|---|---|---|---|---|---|---|---|---|
| Startzeit | s | 13 | 13 | 14 | 9 | 9 | 13 | 13 | 12 | 14 | 13 |
| Abbindezeit | s | 38 | 38 | 37 | 39 | 38 | 36 | 39 | 38 | 39 | 38 |
| Klebfreizeit | s | 43 | 45 | 42 | 45 | 45 | 42 | 49 | 49 | 48 | 45 |
| Kernrohdichte | kg/m3 | 40,2 | 40,7 | 40,8 | 41 | 39,8 | 41,2 | 39,7 | 37,9 | 38,6 | 37,9 |
| Wasseraufnahme (486cm$^3$ Schaum) | g | 9,3 | 9,2 | 8,7 | 10,8 | 10,6 | 8,7 | 10,8 | 11,1 | 8,6 | 10,9 |
| Schaumdruck | hPa | 282 | 328 | 345 | 353 | 338 | 316 | 214 | 321 | 279 | 357 |
| Oberflächenstörungen (Klappdeckelform) | | 1-2 | 1-2 | 1-2 | 4 | 4 | 1-2 | | | | |
| Eindrucktiefe nach 2,5 min | | | | | | | | 8,0 | 5,0 | 8,5 | 4,0 |
| Eindrucktiefe nach 5 min | | | | | | | | 9,0 | 5,5 | 9,5 | 4,5 |
| Brandklasse KBT (ISO 11925-2) | | E | E | E | E | E | E | E | E | E | E |
| Flammhöhe durchschnittlich | mm | 115 | 113 | 102 | 112 | 105 | 108 | 132 | 120 | 128 | 100 |
| Flammhöhe minmax | mm | 110-120 | 110-115 | 100-105 | 110-115 | 100-110 | 105-115 | 130 - 135 | 120 - 120 | 125 - 130 | 100 - 100 |

EP 3 774 969 B1

Aus den Versuchen ist ersichtlich, dass bei der Verwendung von Kaliumformiat weniger des physikalischen Treibmittels Pentan nötig ist, um eine Ziel-Rohdichte von 40 - 41 kg/m$^3$ zu erzielen. Gleichzeitig zeichnen sich alle Beispiele, welche Kaliumformiat als PIR-Katalysator enthalten, durch höhere Schaumdrücke aus. Dies ist bei Verwendung von Dimethylcyclohexylamin (DMCHA) als aminischem Katalysator noch ausgeprägter als bei Verwendung von Dimethylbenzylamin (DMBA).

Enthält die Polyolformulierung jedoch, wie in den Vergleichsbeispielen 4* und 5*, einen Diaminoether (Niax, DMDEE), so werden deutlich mehr Oberflächenstörungen am fertigen Schaum gefunden.

Daneben verfügen die Schäume, die mit Kaliumformiat hergestellt wurden, über eine verbesserte Aushärtung (quantifiziert durch die Eindrucktiefe eines Gewichts nach 2,5 und 5 min) als die Schäume, die mit Kaliumacetat katalysiert wurden (Vergleichsbeispiel 7* vs. 8*, Vergleichsbeispiel 9* vs. 10*).

Überraschenderweise wird auch bei Schäumen, welche das halogenfreie Flammschutzmittel TEP und Kaliumformiat enthalten, ein verbessertes Brandverhalten im Kleinbrennertest (KBT) gegenüber den mit Kaliumacetat katalysierten Schäumen gefunden. Dies ist umso überraschender, als dieser Effekt bei den mit dem Flammschutzmittel TCPP geschützten Schäumen nur für die Kombination aus Kaliumformiat und Dimethylcyclohexylamin - aber weniger stark ausgeprägt - beobachtet werden konnte.

Der Austausch des B1.a-P2 (aromatisches Polyesterpolyol) gegen B1.a-P1 (aliphatisches Polyesterpolyol) (Beispiel 8* vs. Beispiel 10*) bringt ebenfalls deutliche Vorteile in Bezug auf Schaumdrücke, Eindrucktiefe und Brandeigenschaften.

Der Einsatz von Kaliumformiat in Polyurethan-Hartschäumen mit einem Index von 120 zeigt hingegen nicht die gleiche positive Wirkung wie in PUR/PIR-Schäumen (Vergleichsbeispiele 11* und 12*, Tabelle 3). Polyurethanschäume, die mit Kaliumformiat statt Kaliumacetat katalysiert wurden, weisen - bei Einsatz gleicher Pentanmengen - nahezu identischen Schaumdruck und identische Rohdichten auf, sowie nur geringe Unterschiede in der Aushärtung.

Tabelle 3. Formulierung und Eigenschaften von Polyurethan-Hartschäumen (nicht erfindungsgemäß)

| | | Beispiel 11* | Beispiel 12* |
|---|---|---|---|
| B1.b-P4 | pbw | 40,00 | 40,00 |
| B1.b-P5 | pbw | 23,50 | 23,50 |
| B1.b-P6 | pbw | 9,90 | 9,90 |
| B1-P7 | pbw | 15,50 | 15,50 |
| B3.b-1 | | 6,10 | 6,10 |
| D-1 | pbw | 1,80 | 1,80 |
| B3.a-1 | pbw | 3,20 | 3,20 |
| B2.b-2 | pbw | 2,13 | 2,14 |
| B2.c-1 | pbw | 2,02 | |
| B2.a-1 | pbw | | 1,17 |
| C-1 | pbw | 5,32 | 5,34 |
| C-1 | wt-% | 2,01 | 2,02 |
| A-1 | pbw | 149,06 | 149,54 |
| Index | | 119,3 | 119,8 |
| Startzeit | s | 13 | 13 |
| Abbindezeit | s | 46 | 47 |
| Klebfreizeit | s | 43 | 45 |
| Kernrohdichte | kg/m | 62 | 64 |
| Schaumdruck | hPa | 256 | 267 |
| Eindrucktiefe nach 2,5 min | | 8,3 | 7,6 |
| Eindrucktiefe nach 5 min | | 9,2 | 8,4 |

**Patentansprüche**

1.  Verfahren zur Herstellung von Polyurethan/Polyisocyanurat (PUR/PIR)-Hartschaumstoffen umfassend den Schritt i) Umsetzung eines Reaktionsgemisches enthaltend

    A) eine Polyisocyanatkomponente und
    B) eine Isocyanat-reaktive Komponente umfassend

    B1) eine Polyolkomponente,
    B2) eine Katalysatorkomponente,
    B3) gegebenenfalls Hilfs- und Zusatzstoffe, und

    C) ein physikalisches Treibmittel

    **dadurch gekennzeichnet,**

    **dass** die Komponente B) des Reaktionsgemisches

    - 50,0 bis 90,0 Gew.-% wenigstens eines Polyesterpolyols und/oder Polyetheresterpolyols B1.a) mit einer Hydroxylzahl im Bereich von 80 mg KOH/g bis 290 mg KOH/g bestimmt gemäß DIN 53240,
    - 1,0 bis 20,0 Gew.-% wenigstens eines Polyetherpolyols B1.b) mit einer Hydroxylzahl im Bereich von 300 mg KOH/g bis 600 mg KOH/g bestimmt gemäß DIN 53240,
    - 0,0 bis 5,0 Gew.-% niedermolekularen Isocyanat-reaktive Verbindungen B1.c) mit einer Molmasse $M_n$ kleiner als 400 g/mol,
    - 1,0 bis 30,0 Gew.-% wenigstens eines Flammschutzmittels B.3),
    - 0,1 bis 4,0 Gew.-% Kaliumformiat B2.a) und
    - 0,1 bis 3,0 Gew.-% aminische Komponenten B2.b) wobei die Angaben in Gew.-% jeweils auf alle Komponenten der isocyanatreaktiven Zusammensetzung B) bezogen sind,

    enthält,
    und die Komponente A) ein Gemisch von Diphenylmethan-4,4'-diisocyanat mit seinen Isomeren und höherfunktionellen Homologen enthält, und
    **dass** das Reaktionsgemisch weniger als 0,2 Gew.-% Ameisensäure enthält und einen Isocyanat-Index von $\geq$ 150 bis $\leq$ 450 aufweist,
    und unter der Maßgabe, dass die aminische Komponente B2.b) und das in Schritt i) umgesetzte Reaktionsgemisch keine aminischen Verbindungen mit der Formel (I)

    $$R^1N(CH_3)(CH_2CH_2OR^2) \qquad (I)$$

    enthält, wobei
    $R^1$ für $CH_3$, $CH_2$-$CH_2$-$N(CH_3)_2$ oder $CH_2$-$CH_2OH$, und
    $R^2$ für H, $CH_2$-$CH_2OH$ oder $CH_2$-$CH_2N(CH_3)_2$
    steht.

2.  Verfahren gemäß Anspruch 1, wobei das Reaktionsgemisch weiterhin weniger als 0,20 Gew.-% Naphthensäuren enthält.

3.  Verfahren gemäß Anspruch 1 oder 2, wobei die isocyanat-reaktive Komponente B)

    B1.a) mindestens ein Polyol ausgewählt aus der Gruppe bestehend aus Polyesterpolyolen und Polyetheresterpolyolen
    B1.b) gegebenenfalls weitere Polyole ausgewählt aus der Gruppe bestehend aus Polyetherpolyolen, Polycarbonatpolyolen und Polyether-Polycarbonatpolyolen und
    B1.c) gegebenfalls weitere isocyanat-reaktive Komponenten
    umfasst.

4.  Verfahren gemäß Anspruch 1 oder 2, **dadurch gekennzeichnet, dass** die Komponente B) des Reaktionsgemisches, bezogen auf ihr Gesamtgewicht, mindestens 55 Gew.-% eines Polyols B1.a) ausgewählt aus der Gruppe bestehend aus Polyesterpolyolen und Polyetheresterpolyolen enthält.

**5.** Verfahren gemäß einem der vorangehenden Ansprüche, wobei die Komponente B2.b) Dimethylbenzylamin oder Dimethylcyclohexylamin, insbesondere Dimethylcyclohexylamin, enthält.

**6.** Verfahren gemäß einem der vorangehenden Ansprüche, wobei die Komponente B) 0,2 - 4,0 Gew.-% Kaliumformiat B2.a), bezogen auf ihr Gesamtgewicht, enthält.

**7.** Verfahren gemäß einem der vorangehenden Ansprüche, wobei der Gehalt an Komponente B2.b) in der isocyanat-reaktiven Zusammensetzung B) 0,1 - 3,0 Gew.-% beträgt.

**8.** Verfahren gemäß einem der vorangehenden Ansprüche, **dadurch gekennzeichnet, dass** die Katalysatorkomponente B2) 15,0 - 90,0 Gew.-% Kaliumformiat und 10,0 - 85,0 Gew.-% eines aminischen Katalysator B2.b) enthält.

**9.** Verfahren gemäß einem der vorangehenden Ansprüche, **dadurch gekennzeichnet, dass** das Treibmittel C) ein physikalisches Treibmittel ausgewählt aus einer oder mehreren Verbindungen aus der Gruppe enthaltend Kohlenwasserstoffe, halogenierten Ethern und (per)fluorierte Kohlenwasserstoffe, insbesondere Pentanisomere und/oder (hydro)fluorierte Olefine ist.

**10.** Verfahren gemäß einem der vorangehenden Ansprüche, wobei das Reaktionsgemisch weiterhin Wasser enthält.

**11.** Verfahren gemäß einem der vorangehenden Ansprüche, **dadurch gekennzeichnet, dass** das Reaktionsgemisch ein Flammschutzmittel ausgewählt aus der Gruppe bestehend aus Tris(chloro-2-propyl)-phosphat (TCPP), Triethylphosphat (TEP) und Mischungen daraus enthält.

**12.** Verfahren gemäß einem der vorangehenden Ansprüche, weiterhin enthaltend den Schritt ii) Aufbringen des Reaktionsgemisches mittels einer Gießvorrichtung auf eine bewegte Deckschicht, insbesondere in kontinuierlicher Produktion.

**13.** Polyurethan/Polyisocyanurat-Hartschaum, erhältlich mit einem Verfahren gemäß einem der Ansprüche 1 - 12.

**14.** Verbundelemente, enthaltend eine oder zwei Deckschichten und einen Polyurethan/Polyisocyanurat-Hartschaum gemäß Anspruch 13.

**15.** Verwendung eines Verbundelements gemäß Anspruch 14, **dadurch gekennzeichnet, dass** mindestens eine Deckschicht aus Metall ist, für die Herstellung von ebenen oder linierten Wandelementen oder profilierten Dachelementen für den Industriehallen- und Kühlhausbau, oder für LKW-Aufbauten, Hallentüren oder Transportcontainer.

**Claims**

**1.** Process for producing rigid polyurethane/polyisocyanurate (PUR/PIR) foams comprising the step of i) reacting a reaction mixture containing

A) a polyisocyanate component and
B) an isocyanate-reactive component comprising

B1) a polyol component,
B2) a catalyst component,
B3) optionally auxiliary and additive substances, and

C) a physical blowing agent,

**characterized in that**
the component B) of the reaction mixture contains

- 50.0% to 90.0% by weight of at least one polyester polyol and/or polyether ester polyol B1.a) having a hydroxyl number in the range from 80 mg KOH/g to 290 mg KOH/g determined according to DIN 53240,

- 1.0% to 20.0% by weight of at least one polyether polyol B1.b) having a hydroxyl number in the range from 300 mg KOH/g to 600 mg KOH/g determined according to DIN 53240,
- 0.0% to 5.0% by weight of low molecular weight isocyanate-reactive compounds B1.c) having a molar mass $M_n$ of less than 400 g/mol,
- 1.0% to 30.0% by weight of at least one flame retardant B.3),
- 0.1% to 4.0% by weight of potassium formate B2.a) and
- 0.1% to 3.0% by weight of aminic components B2.b) wherein the reported % by weight values are in each case based on all components of the isocyanate-reactive composition B),
and the component A) contains a mixture of diphenylmethane 4,4'-diisocyanate with its isomeric and higher-functional homologs, and
**in that** the reaction mixture contains less than 0.2% by weight of formic acid and has an isocyanate index of $\geq$ 150 to $\leq$ 450,
and with the proviso that the aminic component B2.b) and the reaction mixture reacted in step i) contain no aminic compounds of formula (I)

$$R^1N(CH_3)(CH_2CH_2OR^2) \qquad (I),$$

wherein
$R^1$ represents $CH_3$, $CH_2$-$CH_2$-$N(CH_3)_2$ or $CH_2$-$CH_2OH$, and
$R^2$ represents H, $CH_2$-$CH_2OH$ or $CH_2$-$CH_2N(CH_3)_2$.

2. Process according to Claim 1, wherein the reaction mixture further contains less than 0.20% by weight of naphthenic acids.

3. Process according to Claim 1 or 2, wherein the isocyanate-reactive component B) comprises

    B1.a) at least one polyol selected from the group consisting of polyester polyols and polyether ester polyols
    B1.b) optionally further polyols selected from the group consisting of polyether polyols, polycarbonate polyols and polyether polycarbonate polyols and
    B1.c) optionally further isocyanate-reactive components.

4. Process according to Claim 1 or 2, **characterized in that** based on its total weight the component B) of the reaction mixture contains at least 55% by weight of a polyol B1.a) selected from the group consisting of polyester polyols and polyether ester polyols.

5. Process according to any of the preceding claims, wherein the component B2.b) contains dimethylbenzylamine or dimethylcyclohexylamine, in particular dimethylcyclohexylamine.

6. Process according to any of the preceding claims, wherein based on its total weight the component B) contains 0.2-4.0% by weight of potassium formate B2.a).

7. Process according to any of the preceding claims, wherein the content of component B2.b) in the isocyanate-reactive composition B) is 0.1-3.0% by weight.

8. Process according to any of the preceding claims, **characterized in that** the catalyst component B2) contains 15.0-90.0% by weight of potassium formate and 10.0-85.0% by weight of an aminic catalyst B2.b).

9. Process according to any of the preceding claims, **characterized in that** the blowing agent C) is a physical blowing agent selected from one or more compounds of the group containing hydrocarbons, halogenated ethers and (per)fluorinated hydrocarbons, in particular pentane isomers and/or (hydro)fluorinated olefins.

10. Process according to any of the preceding claims, wherein the reaction mixture further contains water.

11. Process according to any of the preceding claims, **characterized in that** the reaction mixture contains a flame retardant selected from the group consisting of tris(chloro-2-propyl) phosphate (TCPP), triethyl phosphate (TEP) and mixtures thereof.

12. Process according to any of the preceding claims, further comprising the step ii) applying the reaction mixture onto a moving outerlayer using a curtain coater, especially in continuous production.

13. Rigid polyurethane/polyisocyanurate foam obtainable by a process according to any of Claims 1-12.

14. Composite elements containing one or two outerlayers and a rigid polyurethane/polyisocyanurate foam according to Claim 13.

15. Use of a composite element according to Claim 14, **characterized in that** at least one outerlayer is made of metal, for the production of flat wall elements or wall elements having linear features or profiled roof elements for construction of industrial buildings and of cold stores or for truck bodies, industrial doors or transport containers.

**Revendications**

1. Procédé de préparation de mousses dures de polyuréthane/polyisocyanurate (PUR/PIR) - comprenant l'étape i) transformation d'un mélange réactionnel contenant

   A) un composant polyisocyanate et
   B) un composant réactif vis-à-vis d'isocyanate, comprenant

      B1) un composant polyol,
      B2) un composant catalytique,
      B3) le cas échéant des adjuvants et des additifs et

   C) un agent gonflant physique

   **caractérisé**

   **en ce que** le composant B) du mélange réactionnel contient

      - 50,0 à 90,0% en poids d'au moins un polyesterpolyol et/ou polyétheresterpolyol B1.a) présentant un indice d'hydroxyle dans la plage de 80 mg de KOH/g à 290 mg de KOH/g, déterminé selon la norme DIN 53240,
      - 1,0 à 20,0% en poids d'au moins un polyétherpolyol B1.b) présentant un indice d'hydroxyle dans la plage de 300 mg de KOH/g à 600 mg de KOH/g, déterminé selon la norme DIN 53240,
      - 0,0 à 5,0% en poids de composés de bas poids moléculaire, réactifs vis-à-vis d'isocyanate B1.c) présentant une masse molaire $M_n$ inférieure à 400 g/mole,
      - 1,0 à 30,0% en poids d'au moins un agent ignifuge B.3),
      - 0,1 à 4,0% en poids de formiate de potassium B2.a) et
      - 0,1 à 3,0% en poids de composants aminiques B2.b) les indications en % en poids se rapportant à chaque fois à tous les composants de la composition réactive vis-à-vis d'isocyanate B),

   et le composant A) contenant un mélange de 4,4'-diisocyanate de diphénylméthane avec ses isomères et des homologues à fonctionnalité supérieure et
   **en ce que** le mélange réactionnel contient moins de 0,2% en poids d'acide formique et présente un indice d'isocyanate de $\geq 150$ à $\leq 450$,
   et étant entendu que le composant aminique B2.b) et le mélange réactionnel transformé dans l'étape i) ne contient pas de composés aminiques de formule (I)

   $$R^1N(CH_3)(CH_2CH_2OR^2) \qquad (I)$$

   dans laquelle
   $R^1$ représente $CH_3$, $CH_2$-$CH_2$-$N(CH_3)_2$ ou $CH_2$-$CH_2OH$ et
   $R^2$ représente H, $CH_2$-$CH_2OH$ ou $CH_2$-$CH_2N(CH_3)_2$.

2. Procédé selon la revendication 1, le mélange réactionnel contenant en outre moins de 0,20% en poids d'acides naphténiques.

3. Procédé selon la revendication 1 ou 2, le composant réactif vis-à-vis d'isocyanate B) comprenant

B1.a) au moins un polyol choisi dans le groupe constitué par les polyesterpolyols et les polyétheresterpolyols

B1.b) le cas échéant d'autres polyols choisis dans le groupe constitué par les polyétherpolyols, les polycarbonatepolyols et les polyétherpolycarbonatepolyols et

B1.c) le cas échéant d'autres composants réactifs vis-à-vis d'isocyanate.

4. Procédé selon la revendication 1 ou 2, **caractérisé en ce que** le composant B) du mélange réactionnel contient, par rapport à son poids total, au moins 55% en poids d'un polyol B1.a) choisi dans le groupe constitué par les polyesterpolyols et les polyétheresterpolyols.

5. Procédé selon l'une des revendications précédentes, le composant B2.b) contenant de la diméthylbenzylamine ou de la diméthylcyclohexylamine, en particulier de la diméthylcyclohexylamine.

6. Procédé selon l'une des revendications précédentes, le composant B) contenant 0,2 - 4,0% en poids de formiate de potassium B2.a), par rapport à son poids total.

7. Procédé selon l'une des revendications précédentes, la teneur en composant B2.b) dans la composition réactive vis-à-vis d'isocyanate B) représentant 0,1 - 3,0% en poids.

8. Procédé selon l'une des revendications précédentes, **caractérisé en ce que** le composant catalytique B2) contient 15,0 - 90,0% en poids de formiate de potassium et 10,0 - 85,0% en poids d'au moins un catalyseur aminique B2.b).

9. Procédé selon l'une des revendications précédentes, **caractérisé en ce que** l'agent gonflant C) est un agent gonflant physique choisi parmi un ou plusieurs composés du groupe contenant les hydrocarbures, les éthers halogénés et les hydrocarbures (per)fluorés, en particulier les isomères du pentane et/ou les oléfines (hydro)fluorées.

10. Procédé selon l'une des revendications précédentes, le mélange réactionnel contenant en outre de l'eau.

11. Procédé selon l'une des revendications précédentes, **caractérisé en ce que** le mélange réactionnel contient un agent ignifuge choisi dans le groupe constitué par le phosphate de tris(chloro-2-propyle) (TCPP), le phosphate de triéthyle (TEP) et leurs mélanges.

12. Procédé selon l'une des revendications précédentes, contenant en outre l'étape ii) application du mélange réactionnel au moyen d'un dispositif de coulée sur une couche de revêtement en mouvement, en particulier dans une production continue.

13. Mousse dure de polyuréthane/polyisocyanurate, pouvant être obtenue par un procédé selon l'une des revendications 1 - 12.

14. Éléments composites, contenant une ou deux couches de revêtement et une mousse dure de polyuréthane/polyisocyanurate selon la revendication 13.

15. Utilisation d'un élément composite selon la revendication 14, **caractérisée en ce qu'**au moins une couche de revêtement est en métal, pour la fabrication d'éléments muraux plans ou lignés ou d'éléments de toit profilés pour la construction de halls industriels et de chambres froides ou pour des carrosseries de camion, des portes de hall ou des conteneurs de transport.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5286758 A
- WO 0725888 A
- US 4277571 A
- WO 2012126916 A
- EP 2910585 A
- EP 1359177 A
- WO 2010043624 A
- EP 1923417 A
- DE 1609668 A
- DE 1247612 A
- EP 2216156 A1
- WO 2013107742 A
- WO 2013107739 A
- WO 2017021463 A

**In der Beschreibung aufgeführte Nicht-Patentliteratur**

- Reactive Polymers Fundamentals and Applications. Johannes Karl Fink, 2013
- Oligo-Polyols for Elastic Polyurethanes. **IONESCU.** Chemistry and Technology of Polyols for Polyurethanes. Rapra Technology Limited, 2005, 55
- Polyester Polyols for Elastic Polyurethanes. **IONESCU.** Chemistry and Technology of Polyols Polyurethanes. Rapra Technology Limited, 2005, 263
- Polyether Polyols for Rigid Polyurethane Foams. **IONESCU.** Chemistry and Technology of Polyols Polyurethanes. Rapra Technology Limited, 2005, 321
- Polyester Polyols for Rigid Polyurethane Foams. **IONESCU.** Chemistry and Technology of Polyols Polyurethanes. Rapra Technology Limited, 2005, 419
- Polyurethane. Kunststoffhandbuch. vol. 7